## Europäisches Patentamt
## European Patent Office
## Office européen des brevets

(19)

(11) Veröffentlichungsnummer: **0 263 993**
**B1**

(12) **EUROPÄISCHE PATENTSCHRIFT**

(45) Veröffentlichungstag der Patentschrift:
**27.12.90**

(51) Int. Cl.⁵: **G21C 9/00**

(21) Anmeldenummer: **87113520.8**

(22) Anmeldetag: **16.09.87**

(54) Druckabbausystem für den Sicherheitsbehälter eines Kernreaktors.

(30) Priorität: **17.10.86 DE 3635342**

(43) Veröffentlichungstag der Anmeldung:
**20.04.88 Patentblatt 88/16**

(45) Bekanntmachung des Hinweises auf die Patenterteilung:
**27.12.90 Patentblatt 90/52**

(84) Benannte Vertragsstaaten:
**BE CH DE FR GB LI NL**

(56) Entgegenhaltungen:
EP-A- 0 056 830
DE-A- 3 212 265
DE-A- 3 341 486
FR-A- 1 335 432
FR-A- 2 267 816

(73) Patentinhaber: **KERNFORSCHUNGSZENTRUM KARLSRUHE GMBH**, Weberstrasse 5 Postfach 3640, D-7500 Karlsruhe 1(DE)

(72) Erfinder: **Dillmann, Hans-Georg**, Luisenstrasse 62, D-7514 Eggenstein-Leopoldshafen(DE)
Erfinder: **Martinsteg, Hans**, Erftweg 4a, D-5106 Rueken(DE)

ACTORUM AG

## Beschreibung

Die vorliegende Erfindung betrifft ein Druckabbausystem für den Sicherheitsbehälter eines Kernreaktors gemäß dem Oberbegriff des Patentanspruches 1.

Nach hypothetischen Kernschmelzenunfällen wird angenommen, daß im Sicherheitsbehälter eines Kernreaktors im Verlauf von Tagen der Innendruck ansteigen kann. Zu einer Druckbegrenzung bzw. Druckabsenkung sieht man Abblasearmaturen vor, die über eine Leitung, die den Containmentinnenraum mit der Atmosphäre bzw. dem Abluftkamin verbindet, die über eine Filteranlage in diesen Kamin bläst. Eine solche Anlage ist Gegenstand der hier vorliegenden Erfindung.

Mit den bekannten Filterelementen und Filteranlagen nach dem Stand der Technik sind nun die anstehenden Bedingungen bei einem solchen Abblasevorgang wie Kombinationen von Wasser, Dampf, Temperatur und Strahlung nicht beherrschbar.

Die vorliegende Erfindung hat daher zur Aufgabe, ein Druckabbausystem für den Sicherheitsbehälter eines Kernreaktors anzugeben, welches unter Verwendung von Filterelementen aus Edelstahlfaserpaketen eine oben beschriebene Druckbegrenzung ermöglicht, und dabei ihre Funktion über einen längeren Zeitraum aufrechterhält. Die Anlage muß daher besonders hochwarmfest und korrosionsresistent ausgebildet sein, wartungsarm betrieben werden können, sowie eine hohe Betriebssicherheit aufweisen.

Zur Lösung dieser Aufgabe schlägt nun die vorliegende Erfindung bei einem Druckabbausystem der eingangs beschriebenen Art die Merkmale vor, die im Kennzeichen des Patentanspruches 1 von a) bis d) angegeben sind. Besonders vorteilhafte Ausführungsformen der vorliegenden Erfindung ergeben sich aus den Merkmalen, die in den Kennzeichen der Patentansprüche 2 bis 4 angegeben sind.

Wie aus dem Vorhergehenden ersehen werden kann, führt das Druckabbausystem gemäß der vorliegenden Erfindung zu einer erheblichen Verbesserung der Anlagensicherheit und zur Senkung des Restrisikos, ohne daß zusätzliche Notfallschutzmaßnahmen erforderlich sind. Die erfindungsgemäße Anlage weist darüber hinaus auch unter den extremen Bedingungen, die beim beschriebenen Anwendungsfall auftreten können, eine sehr hohe Standzeit und Betriebssicherheit auf.

Weitere Einzelheiten der vorliegenden Erfindung werden im folgenden und anhand der Figuren näher erläutert. Es zeigen die:

Figur 1 mehrere hintereinander geflanschte modulare Kanalstücke mit Blickrichtung auf die seitlichen Öffnungen, die

Figur 2 ein Kanalstück in perspektivischer Ansicht und die

Figur 3 einen Schnitt durch die Verspannung der Edelstahlfaserpakete zwischen den an die Kanalstücke angeflanschten Rahmenelementen.

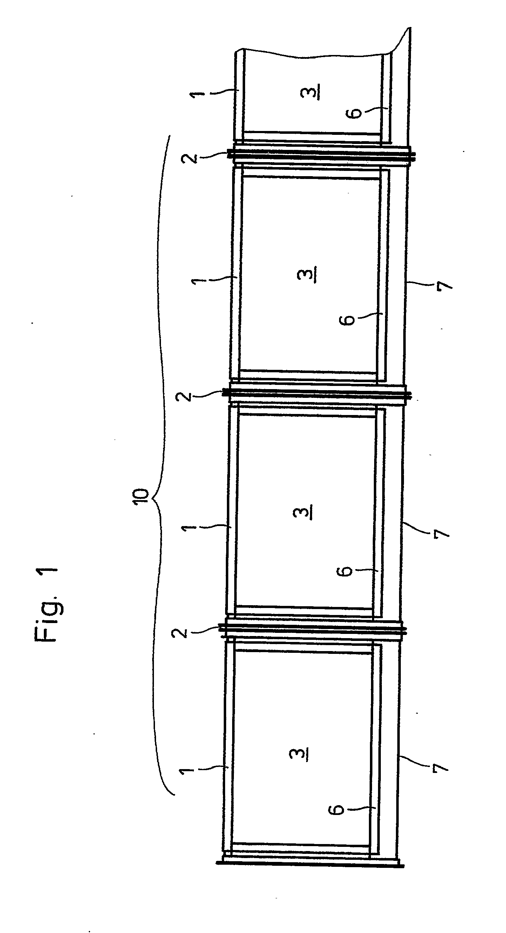

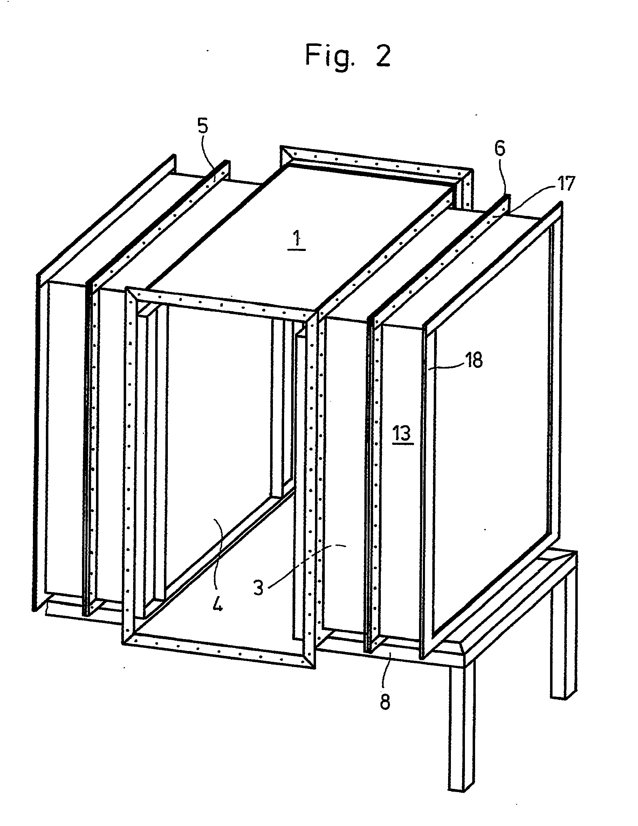

Gemäß der Figur 1 sind mehrere modulare Kanalstücke 1, wie sie die Figur 2 im Einzelnen zeigt, als Teil einer Verbindungsleitung zwischen dem Innenraum des Sicherheitsbehälters eines Kernreaktors und der Außenatmosphäre – normalerweise dem Abluftkamin des Kernreaktors – unter Beifügung von Dichtungen 2 gasdicht zu einem Druckentlastungskanal zusammengeschraubt. An den beiden Seitenflächen befinden sich seitliche Öffnungen 3 und 4, die mit Flanschen 5 und 6 versehen sind. Der Boden 7 der Kanalstücke 1 kann, wie aus Figur 1 ersichtlich gegenüber den Öffnungen 3 und 4 etwas vertieft zur Aufnahme von Kondensat ausgebildet sein. Die Flansche 5 und 6 werden aus angeschweißten Winkelrahmen gebildet, die Kanalstücke sind üblicherweise auf Gestellen 8 befestigt bzw. aufgestellt.

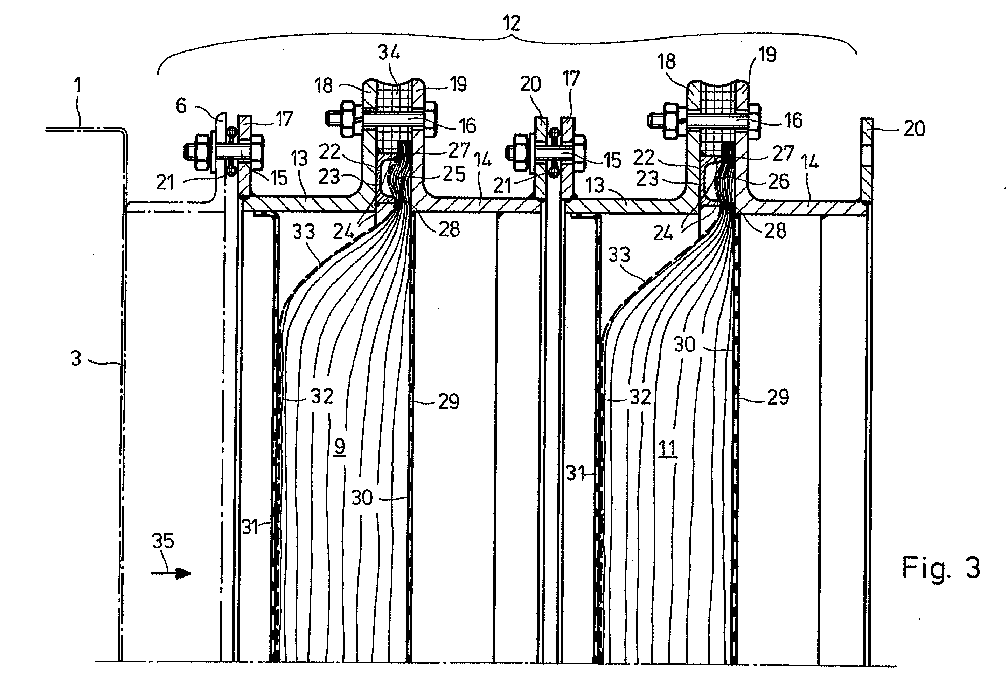

Die eigentlichen Filterstufen werden aus einem Vorfilter und einem Hauptfilter gebildet, die Edelstahlfaserpakete 9 und 11 als Filterelemente aufweisen. Die Edelstahlfaserpakete 9 und 11, die in Figur 3 dargestellt sind, bestehen aus Edelstahlfasermatten, deren Fasern Durchmesser bis zu 2 μm herab aufweisen.

Diese Faserpakete sind nun in Seitensträngen 12 des in der Figur 1 dargestellten Kanales 10 auf besondere Weise untergebracht. Die Seitenstränge 12 sind aus einer gleichen, mit Flanschen versehen Rahmenelementen 13 und 14 zusammengesetzt, die auf besondere Weise mit Schrauben 15 und 16 unter gegenseitiger Abdichtung zusammengeschraubt sind. Die Rahmenelemente 13 und 14 bestehen aus einem hohlen Blechkasten, der beidseitig angeschweißte Flansche 17, 18 und 19, 20 aufweist. Das Rahmenelement 13 ist nun zusammen mit seinem einen Flansch 17 und der Dichtung 21 dicht an den Flansch 6 oder in rückseitigen Flansch 5 geschraubt (siehe auch Figur 2). Die weitere Verschraubung im Zuge der Seitenstränge 12 erfolgt auf die selbe Weise. Auf die Innenfläche seines anderen Flansches 18 ist ein U-Profil 22 mit der Grundfläche seiner Rückseite 23 aufgeschweißt (in der Figur 2 nicht mehr dargestellt), so daß die Schenkeln 24 des U vom Flansch abgewendet sind. Zwischen dem Flansch 19 des nächsten Rahmenelementes 14 und den Schenkeln 24 des U werden bei anziehenden Schrauben 16 die Ränder 25, 26 der Faserpakete 9 und 11 eingeklemmt, so daß sich an jedem U-Profilrahmen 22 bzw. seinen Schenkeln 24 zwei umlaufende Dichtkanten 27 und 28 bzw. eine Doppeldichtung ergibt. Dabei werden die Ränder 25 und 26 auf einen Bruchteil ihrer ursprüngliche Dichte zusammengedrückt.

In die Flansche 19 der Rahmenelemente 14 sind Lochbleche 29 bündig eingeschweißt, so daß die Abströmseite 30 der Faserpakete 9 und 11 daran flach anliegt. Weitere Lochbleche 31 sind in den Innenraum der Rahmenelemente 13 eingesetzt, die die Faserpakete 9 und 11 an ihrer gewölbten Seite 32 halten. Zusätzlich dazu liegt auf der gewölbten Seite 32 ein Edelstahlgewebe 33, welches der gewölbten Kontur folgt, das Faserpaket stützt und gegen Ausfransen schützt. Dieses Edelstahlgewebe 33 ist zusammen mit den Rändern 25 und 26 zwischen den Flanschen 18 und 19 eingespannt.

In den außerhalb der Ränder 25 und 26 zwischen den Schrauben 16 verbleiben Raum ist zum Schutz der Ränder eine Füllung 34 aus wärmebeständiger Dichtungsmasse eingegossen. Die Anströmrichtung 35 der den Filterstufen zugeführten Abluft erfolgt von der gewölbten Seite 32 her, sie kann aber auch von der flachen Seite 30 her erfolgen, d.h. die Faserpakete 9 und 11 sitzen spiegelbildlich zu der in der Figur 3 gezeichneten Bauweise.

Bezugszeichenliste

1 modulare Kanalstücke
2 Dichtungen
3, 4 seitliche Öffnungen
5, 6 Flansche
7 vertiefter Boden
8 Gestell
9 Vorfilter
10 Druckentlastungskanal
11 Hauptfilter
12 Seitenstrang
13, 14 Rahmenelemente
15, 16 Schrauben
17, 18 Flansche
19, 20 Flansche
21 Dichtung
22 U-Profilrahmen
23 Rückseite
24 Schenkel
25, 26 Ränder
27, 28 Dichtkanten
29 Lochbleche
30 flache Seite
31 Lochbleche
32 gewölbte Seite
33 Edelstahldrahtgewebe
34 Dichtungsmasse
35 Anströmrichtung

**Patentansprüche**

1. Druckabbausystem für den Sicherheitsbehälter eines Kernreaktors mit einer Verbindungsleitung zwischen Behälterinnenraum und Reaktorabluft bzw. Atmosphäre sowie einer in diese eingeschalteten Filterstrecke als Unfallabluftfilter mit hintereinander liegenden Filterelementen aus Edelstahlfaserpaketen als Filterstufen, gekennzeichnet durch die folgenden Merkmale:
   a) in die Verbindungsleitung sind mehrere modulare Kanalstücke (1) unter Abdichtung hintereinander geflanscht, wobei jedes Kanalstück (1) eine oder zwei einander gegenüberliegende seitliche Öffnungen (3, 4) mit entsprechenden Flanschen (5, 6) aufweist,
   b) an die Öffnungen (3, 4) sind mit beidseitigen Flanschen (17, 18; 19, 20) versehene Rahmenelemente (13, 14) jeweils zu mehreren hintereinander angeflanscht,
   c) zwischen die Flansche (18; 19) von verschiedenen Rahmenelementen (13; 14) sind die Ränder (25, 26) der den gesamten Innenraum der Rahmenelemente (13, 14) ausfüllenden Edelstahlfaserpakete (9, 11) direkt eingeklemmt und in diesem Bereich auf einen Bruchteil der ursprünglichen Dicke der Pakete zusammengepreßt,
   d) auf die Innenflächen der Flansche (18) ist an den jeweiligen Faserpaketen (9, 11) ein um den Flansch umlaufender Rahmen (22) aus U-Profil aufgeschweißt, wobei die Schenkel (24) des U in die Ränder (25, 26) der Faserpakete (9, 11) eingedrückt sind, die Pressung erzeugen und die Dichtkanten (27, 28) bilden.

2. Druckabbausystem nach Anspruch 1, gekennzeichnet durch die weiteren Merkmale:
   e) die Metallfaserpakete (9, 11) liegen mit ihrer einen Seite (30) flach auf jeweils einem Lochblech (29) an, welches mit dem Flanschring (19) des jeweils nächstfolgenden Rahmenelementes (14) bündig ist,
   f) auf der anderen Seite ist die gewölbte Oberfläche (32) der Metallfaserpakete (9, 11) durch ein Edelstahlgewebe in (33) begrenzt, welches der Kontur des Faserpaketes folgt und mit in die Flansche (18, 19) eingeklemmt ist,
   g) der U-Profilrahmen (22) ist mit der Rückseite (23) seiner Grundfläche auf die der gewölbten Seite (32) der Metallfaserpakete (9, 11) zugewendeten Innenfläche der Flansche (18) aufgeschweißt und drückt mit seinen Schenkeln (24) auf die Ränder (25, 26) der Faserpakete (9, 11).

3. Druckabbausystem nach Anspruch 1 oder Anspruch 2, dadurch gekennzeichnet, daß die gewölbte Seite (32) der Metallfaserpakete (9, 11) die Anströmseite und die flache Seite (30) die Abströmseite oder umgekehrt ist.

4. Druckabbausystem nach Anspruch 1 oder Anspruch 2, dadurch gekennzeichnet, daß die Bereiche zwischen den Flanschen (18, 19) außerhalb der Ränder (25, 26) bei einem oder mehreren der Flansche mit Dichtungsmasse (34) vergossen sind.

**Revendications**

1. Système de dépressurisation pour le confinement de sécurité d'un réacteur nucléaire, comportant un conduit de raccordement entre l'espace interne du confinement et l'air évacué du réacteur ou l'atmosphère, ainsi qu'un trajet filtrant inséré dans celui-ci, sous forme d'un filtre à air expulsé en cas d'accident, comportant des éléments filtrants disposés les uns derrière les autres, constitués de paquets de fibres en acier spécial, en tant qu'étages filtrants, caractérisé par les caractéristiques suivantes;
   a) dans le conduit de raccordement sont fixés à l'aide de brides, les uns derrière les autres, avec étanchéité, plusieurs éléments de canal modulaires (1), chaque élément de canal (1) comportant une ou deux ouvertures latérales se faisant face, avec des brides (5, 6) correspondantes,
   b) au niveau des ouvertures (3, 4) sont fixés à l'aide de brides, à plusieurs les uns derrière les autres, des éléments de cadre (13, 14) munis de brides (17, 18; 19, 20) des deux côtés,
   c) entre les brides (18, 19) de divers éléments de cadre (13, 14) sont coincés directement les bords (25, 26) des paquets de fibres (9, 11) en acier spécial remplissant tout l'espace interne des éléments de cadre (13, 14) et ceux-ci sont pressés dans cette zone jusqu'à une fraction de l'épaisseur initiale des paquets,

d) sur les faces internes des brides (18) est soudé au paquet de fibres respectif (10, 11) un cadre (22) en profil en U entourant la bride, les branches (24) de l'U étant pressées dans les bords (25, 26) des paquets de fibres (9, 11), engendrent la pression et forment les bords étanches (27, 28).

2. Système de dépressurisation selon la revendication 1, caractérisé par les caractéristiques suivantes:

e) les paquets de fibres métalliques (9, 11) reposent à plat par une de leur face (30) chacun sur une tôle perforée (29) qui est en liaison avec l'anneau de bride (19) de l'élément de cadre (14) y faisant immédiatement suite,

f) de l'autre côté, la face courbée (32) des paquets de fibres métalliques (9, 11) est limitée en (33) par une toile en acier spécial qui suit le contour du paquet de fibres et est coincée dans les brides (18, 19),

g) le cadre en profil en U (22) est soudé par la face arrière (23) de sa base à la face interne des brides (18) faisant face à la face courbée (32) des paquets de fibres métalliques (9, 11) et presse avec ses branches (24) sur les bords (25, 26) des paquets de fibres (9, 11).

3. Système de dépressurisation selon la revendication 1 ou 2, caractérisé en ce que la face courbée (32) des paquets de fibres métalliques (9, 11) est le côté d'arrivée du courant et la face plane (30) est le côté d'évacuation du courant, ou vice-versa.

4. Système de dépressurisation selon la revendication 1 ou 2, caractérisé en ce que, dans le cas d'une ou plusieurs des brides, une matière d'étanchéité est coulée dans les zones entre les brides (18, 19) à l'extérieur des bords (25, 26).

**Claims**

1. Pressure reducing system for the safety containment of a nuclear reactor, having a connection pipe between the interior of the containment and the spent air of the reactor, or respectively the atmosphere, and a filter section, which is inserted into said pipe and serves as an emergency spent air filter having filter elements which are situated one behind the other and are formed from stainless steel fibre bundles serving as filter stages, characterised by the following features:

a) a plurality of modular conduit pieces (1) are flange-mounted in the connection pipe one behind the other with sealing therebetween, each conduit piece (1) having one or two lateral openings (3, 4), which are situated opposite one another and are provided with corresponding flanges (5, 6);

b) frame elements (13, 14), which are provided with flanges (17, 18; 19, 20) at each end, are flange-connected to the openings (3, 4) one behind the other to form a plurality thereof;

c) the edges (25, 36) of the stainless steel fibre bundles (9, 11), which fill the entire interior of the frame elements (13, 14), are clamped in position directly between the flanges (18; 19) of different frame elements (13, 14) and are compressed in this region to a fraction of the original thickness of the bundles.

d) a frame (22), which extends around the flange and is formed from a U-shaped profile, is welded onto the inner surfaces of the flanges (18) at the respective fibre bundles (9, 11), the arm (34) of the U being pressed into the edges (25, 26) of the fibre bundles (9, 11), producing the pressing force and forming the sealing edges (27, 28).

2. Pressure reducing system according to claim 1, characterised by the additional features:

e) the metal fibre bundles (9, 11) each abut with their one side (30) flat against a respective perforated sheet of metal (39), which is flush with the flange ring (19) of the next successive frame element (14);

f) on the other side, the curved surface (32) of the metal fibre bundles (9, 11) is defined by a stainless steel fabric (33), which follows the configuration of the fibre bundle and is clamped in position therewith in the flanges (18, 19);

g) the U-shaped profile frame (22) is welded, by the rear end (23) of its bottom surface, onto the inner face of the flanges (18) facing the curved surface (32) of the metal fibre bundles (9, 11) and presses, with its arms (24), upon the edges (25, 26) of the fibre bundles (9, 11).

3. Pressure reducing system according to claim 1 or claim 2, characterised in that the curved surface (32) of the metal fibre bundles (9, 11) is the inlet end, and the flat side (30) is the outlet end, or vice versa.

4. Pressure reducing system according to claim 1 or claim 2, characterised in that the regions between the flanges (18, 19) externally of the edges (25, 26) are filled with sealing composition (34) in the case of one or a plurality of the flanges.

Fig. 1

EP 0 263 993 B1

# Fig. 2

Fig. 3

EP 0 263 993 B1